# EUROPEAN PATENT APPLICATION

(11) **EP 1 762 838 A1**
(43) Date of publication of application: **14.03.2007**
(21) Application number: 06756443.5
(22) Date of filing: 22.05.2006
(51) Int. Cl.: G01N 13/10, G01N 13/16, G01N 1/28

(54) **SAMPLE STAND ARRANGEMENT FOR SCANNING TYPE PROBE MICROSCOPE**

(30) Priority: 10.06.2005 JP 2005171269
(71) Applicant: Olympus Corporation, Tokyo 151-0072 (JP)
(72) Inventor: YAGI, Akira c/o Intel. Property Support Department, Hachioji-shi, Tokyo 192-8512 (JP)
(74) Representative: von Hellfeld, Axel
(86) International application number: PCT/JP2006/010137
(87) International publication number: WO 2006/132075

(57) **Abstract**

A specimen stage array (10) includes ten specimen stages (12), which are integrally held by a bridge portion (14) and the left end portion of a glass plate (GP). The specimen stage array (10) is fabricated by cutting the glass plate (GP). All the specimen stages (12) are arrayed so that specimen fixing surfaces (12a) are included in a common plane.

## Description

### Technical Field

The present invention relates to a specimen stage for a scanning probe microscope.

### Background Art

An atomic force microscope (AFM) is one typical device of scanning probe microscopes. The atomic force microscope is an instrument that detects the influence of a force that acts when a distance between a probe and a specimen changes from the sub nm order to the nm order as a displacement or a change in resonance characteristics of a cantilever connecting to the probe, so as to measure the three-dimensional image of the specimen. In a high-speed AFM, the cantilever is changed from one having a response speed of several kHz to several 100 kHz, which is used in the conventional AFMs, to one having a response speed of 500 kMz or more. This enables scanning of 100 lines or more per second. To scan a specimen stage at a high speed, the lighter the specimen stage, the better.

The specimen stage of a high-speed AFM, such as one obtained by cutting glass or one obtained by cutting a resin, is fabricated separately. The specimen stage has a surface to which the specimen is adsorbed and a surface in contact with a scanner. The specimen fixing surface that adsorbs the specimen is used after adhering mica to it or subjecting it to surface treatment to form an underlying layer that adsorbs the specimen.

Regarding the surface treatment of the specimen fixing surface, the surface treatment conditions must be constant to improve the reproducibility and allow comparison of differences among specimens. Conventional specimen stages, however, are separate from each other. Accordingly, conditions such as the activity of the specimen as the result of the surface treatment of the specimen stage and the adsorbing density of the specimen largely vary among the individual specimens. Also, as the specimen stage is small, handling of the specimen stage to perform uniform treatment is difficult.

### Disclosure of Invention

For example, the high-speed AFM is used for measurement to check the motion and reactivity of specimen molecules.

To control the fixing strength for the specimen, the charged state, hydrophilic nature, and hydrophobic nature of the specimen stage surface must be controlled. To hold the specimen by utilizing specific adsorption among molecules, surface treatment is preferably performed so that the surface density of the molecules that adsorb the specimen in a specific manner becomes constant.

In the high-speed AFM, to realize high-speed scanning, the specimen stage must be small, and the size of the portion that fixes the specimen falls within a range of approximately 1 mm in diameter to approximately 2 mm in diameter. When subjecting such a small specimen stage to surface treatment, it is difficult to avoid variations in process time and reaction by handling the specimen stage carefully.

The present invention has been made in consideration of the above situation, and its object is to provide a specimen stage array that enables easy, uniform surface treatment of the specimen fixing surfaces of specimen stages.

A specimen stage array according to the present invention includes specimen stages to hold specimens as observation targets of a scanning probe microscope, respectively, the specimen stages include specimen fixing surfaces to which the specimens are fixed, respectively, and all the specimen stages are arrayed so that the specimen fixing surfaces of all the specimen stages are included in a common plane.

### Brief Description of Drawings

FIG. 1 shows the first step in the process of fabricating a specimen stage array according to the first embodiment of the present invention;
FIG. 2 shows a step that follows the step shown in FIG. 1 of the process of fabricating the specimen stage array according to the first embodiment of the present invention;
FIG. 3 shows a step that follows the step shown in FIG. 2 of the process of fabricating the specimen stage array according to the first embodiment of the present invention;
FIG. 4 shows a step that follows the step shown in FIG. 3 of the process of fabricating the specimen stage array according to the first embodiment of the present invention;
FIG. 5 shows a finished product of the specimen stage array according to the first embodiment of the present invention;
FIG. 6 shows a state wherein a specimen stage obtained from the specimen stage array of FIG. 5 is attached to the Z scanner of a high-speed AFM;
FIG. 7 shows a specimen stage array according to the second embodiment of the present invention;
FIG. 8 shows a state wherein a specimen stage obtained from the specimen stage array of FIG. 7 is attached to the Z scanner of a high-speed AFM; and
FIG. 9 shows a specimen stage array according to the third embodiment of the present invention.

### Best Mode for Carrying Out the Invention

The embodiments of the present invention will be described hereinafter with reference to the drawings.

### <First Embodiment>

The first embodiment is directed to a specimen stage array fabricated by machining a glass plate. Machining of the glass plate employs a dicing saw, a diamond cutter, or the like. The specimen stage array according to this embodiment is fabricated in accordance with the following processing procedure.

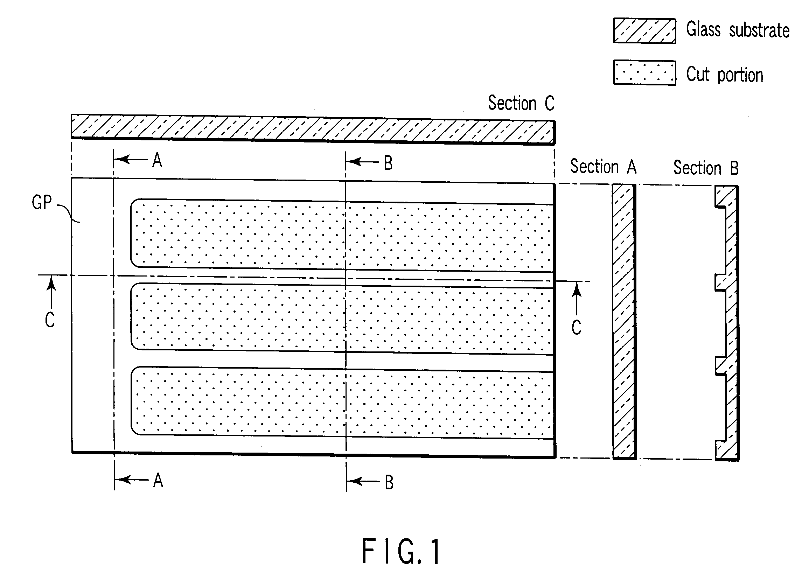

First, as shown in FIG. 1, a glass plate GP is cut down in the surface that will be specimen fixing surfaces except for the left end part with a constant width and a constant depth in the direction of a section C and at intervals in the direction of a section B.

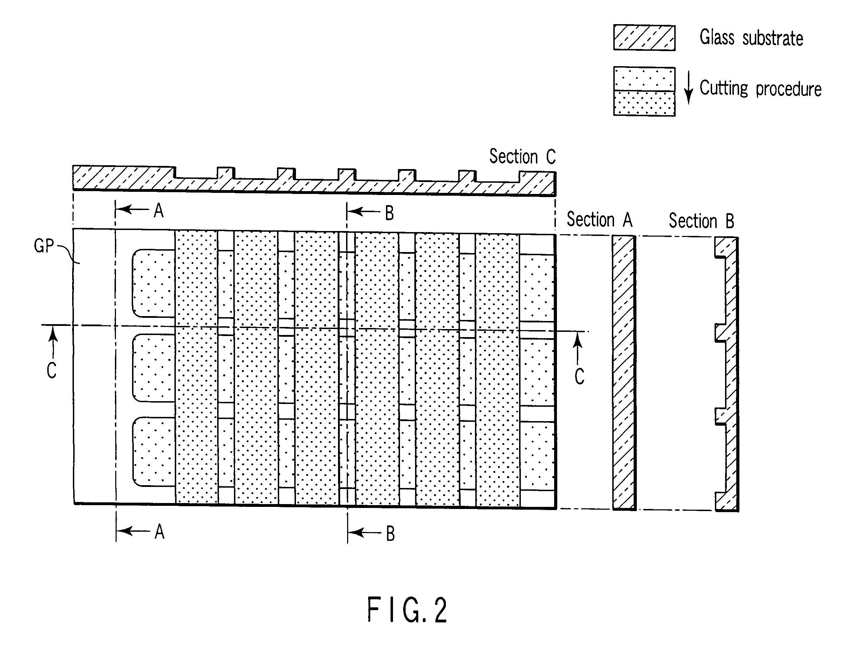

As shown in FIG. 2, the surface that will be specimen fixing surfaces is cut down with a constant width and a constant depth in the direction of the section B and at intervals in the direction of the section C.

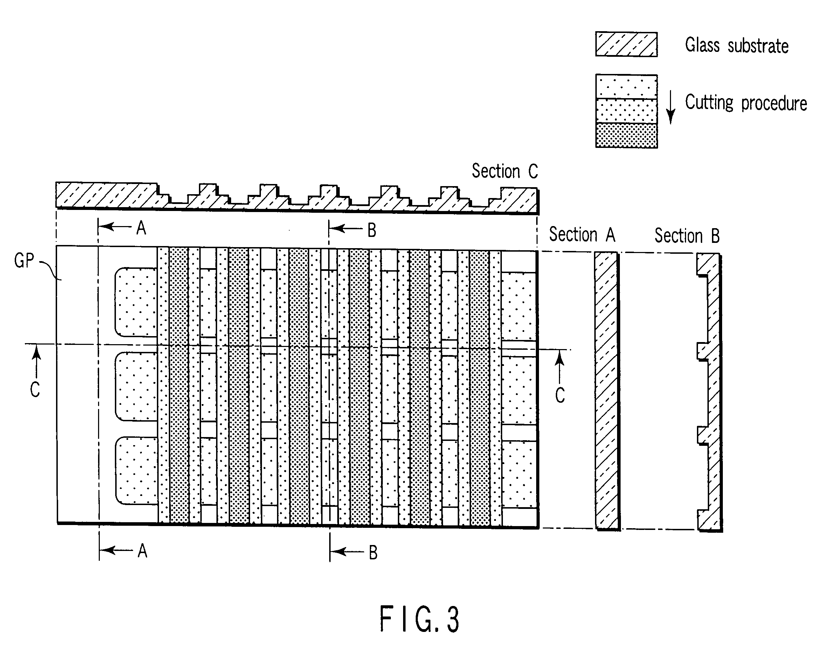

Subsequently, as shown in FIG. 3, an inner part of each portion that has been cut in the process of FIG. 2 is cut down with a constant width and a constant depth in the direction of the section B and at intervals in the direction of the section C, leaving a thickness corresponding to the thickness of bridge portions, which are to be broken when obtaining specimen stages.

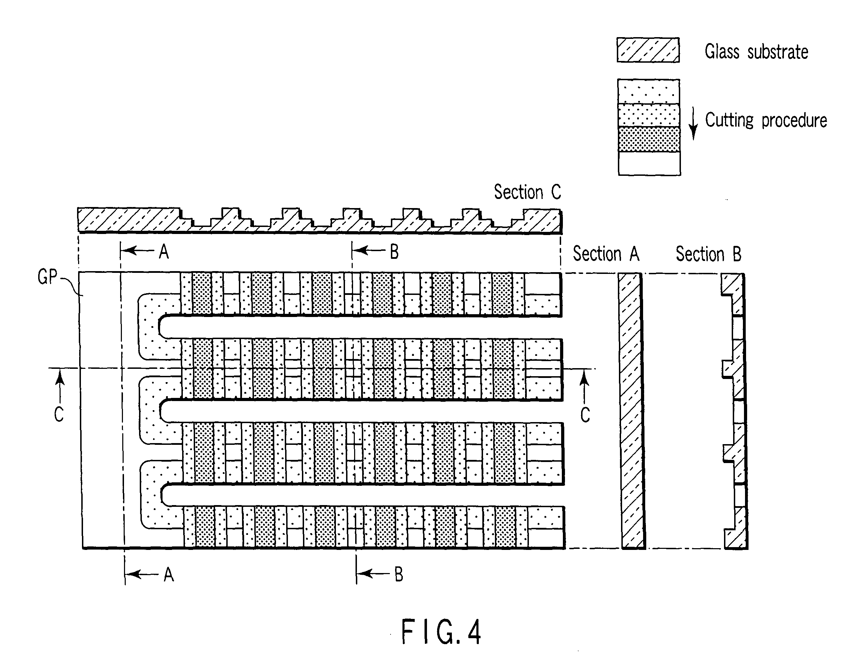

Furthermore, as shown in FIG. 4, an inner part of each portion that has been cut in the process of FIG. 1 is cut away with a constant width and a constant depth in the direction of the section C and at intervals in the direction of the section B.

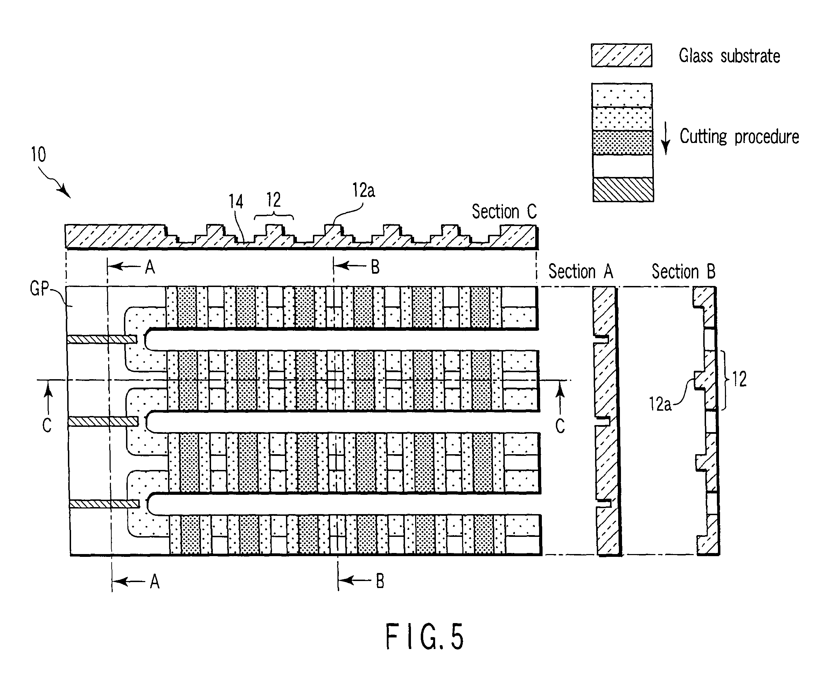

Finally, as shown in FIG. 5, incisions to facilitate separation of the specimen stage array into rows are formed to complete a specimen stage array 10 of this embodiment.

In the specimen stage array of this embodiment, specimen stages are arrayed in rows. Alternatively, in the step of FIG. 4, the glass plate GP may be cut through in the direction of the section C to form a specimen stage array in which specimen stages are arrayed linearly.

As shown in FIG. 5, the specimen stage array 10 includes ten specimen stages 12, which are integrally held by bridge portions 14 and the left end portion of the glass plate GP. The specimen stage array 10 of this embodiment is fabricated by cutting the glass plate GP, which is a flat plate member of the same material. Thus, all the specimen stages 12 are arrayed so that specimen fixing surfaces 12a are included in a common plane. This readily allows uniform surface treatment of the specimen fixing surfaces 12a of all the specimen stages 12 of the specimen stage array 10. The surface treatment may include dipping the entire specimen stage array in a processing solution, depositing a metal such as gold on the specimen fixing surfaces 12a, uniformly spraying a processing solution to the specimen fixing surfaces 12a, plasma-ashing the specimen fixing surfaces 12a to incinerate organic contamination, and the like.

Conventionally, the specimen stages cannot but be surface-treated separately. The specimen stage array 10 of this embodiment enables simultaneous surface treatment of the specimen stages 12. For example, the surface treatment includes forming a film, from which a gold surface 111 is exposed, as a specimen fixing surface to adsorb a specimen, and bonding a functional group such as an SH group, an amino group, a carboxyl group, a sulfone group, or the like to the specimen fixing surface with a constant density by using a silane coupler.

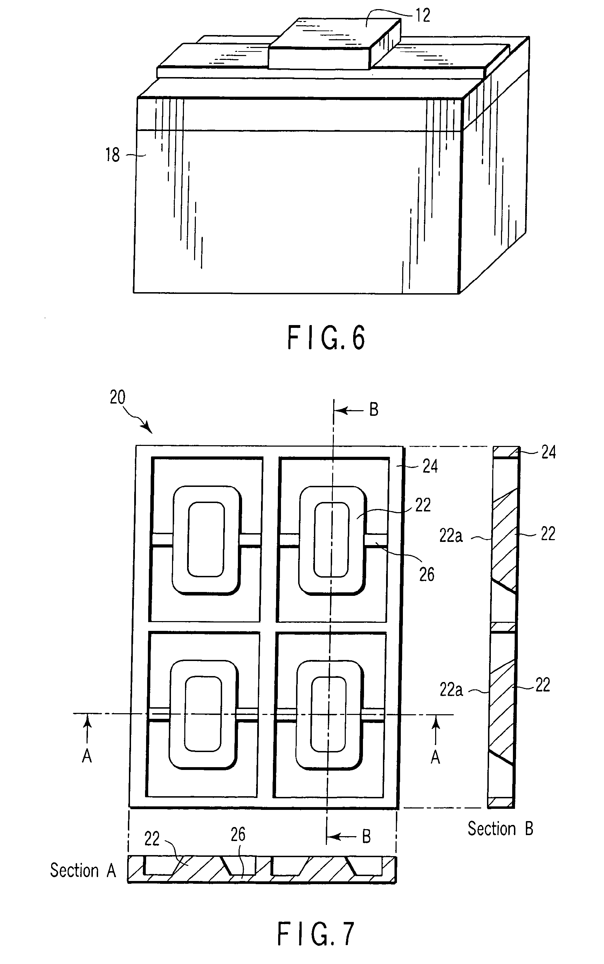

The specimen stage 12 cut out from the specimen stage array is directly adsorbed to a Z scanner 18 of the high-speed AFM by using an adhesive material, as shown in FIG. 6.

### <Second Embodiment>

The second embodiment is directed to a specimen stage array that is fabricated using a silicon process. As shown in FIG. 7, a specimen stage array 20 according to this embodiment has specimen stages 22, a frame 24 surrounding the specimen stages 22, and bridge portions 26 connecting the specimen stages 22 and the frame 24. This specimen stage array is fabricated from a semiconductor substrate such as a silicon substrate using the MEMS technique such as a masking process, isotropic and anisotropic etching, and the like. As is apparent from a section A, the specimen stages 22 to the frame 24 are integrally connected by the bridge portions 26.

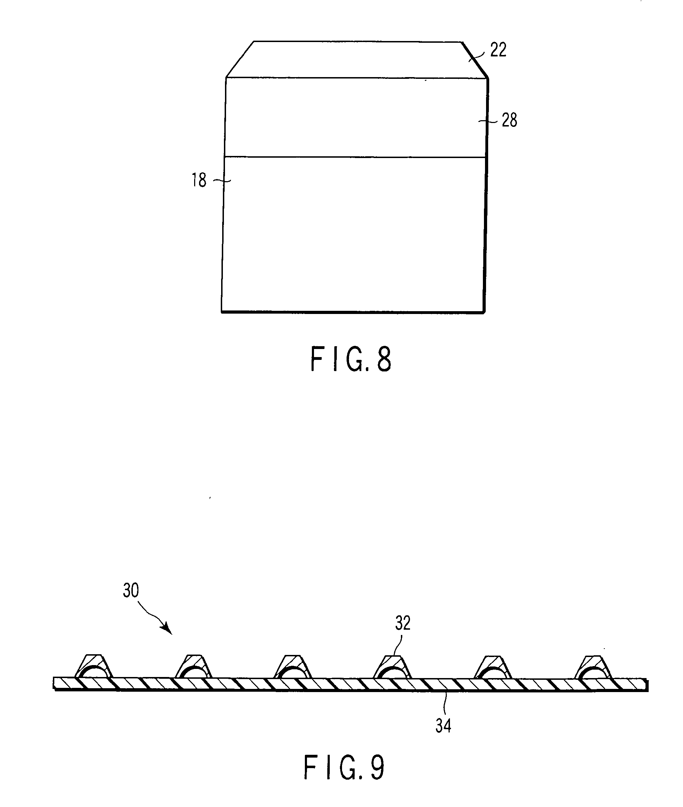

Since specimen stage 22 of the second embodiment is thinner than the specimen stage 12 of the first embodiment, when the specimen stage 22 is applied to a high-speed AFM that is installed to match the height of the specimen stages 12 of glass of the first embodiment, the specimen stage 22 is not directly adhered to a Z scanner 18, but through a spacer 28, as shown in FIG. 8.

Since the specimen stage array 20 of this embodiment is fabricated by cutting the semiconductor substrate, which is a flat plate member of the same material, using the MEMS technique, all the specimen stages 22 are arrayed so that specimen fixing surfaces 22a are included in a common plane. This accordingly readily allows uniform surface treatment of specimen fixing surfaces 22a of all the specimen stages 22 of the specimen stage array 20, like the first embodiment.

In the specimen stage array of the second embodiment, the frame 24 and the bridge portions 26 hold the specimen stages 22 independently of each other. This enables cutting out a specimen stage 22 at an arbitrary position and using it.

### <Third Embodiment>

The third embodiment is directed to a specimen stage array that is fabricated by arraying specimen stages on a holding member. As shown in FIG. 9, a specimen stage array 30 according to this embodiment comprises specimen stages 32 and a holding member 34 to hold the specimen stages 32. The holding member 34 comprises a film having an adhesive surface. The specimen stages 32 are arranged on the holding member 34 at constant intervals, and their scanner contact surfaces are adhered to the adhesive surface of the holding member 34. All the specimen stages 32 are held on the holding member 34 so that they have the same height. As a result, the specimen fixing surfaces of all the specimen stages 32 are included in a common plane. The holding member 34 may comprise a plate member coated with an adhesive material in place of the film having the adhesive surface.

In the specimen stage array 30 according to the third embodiment, the holding member 34 holds all the specimen stages 32 so that the specimen fixing surfaces are included in a common plane. Thus, this embodiment readily allows uniform surface treatment of the specimen fixing surfaces 32a of all the specimen stages 32 of the specimen stage array 30, like the first embodiment.

In the specimen stage array 30 of the second embodiment, the film having the adhesive surface is pulled to strip off the scanner contact surfaces of the specimen stages 32 from it, so that the specimen stages 32 are separated one by one. Since this separation does not produce dust such as glass pieces or silicon pieces, impurities are hardly to present on the specimen surfaces.

So far the embodiments of the present invention have been described with reference to the drawings. Note that the present invention is not limited to these embodiments. Various changes and modifications may be made without departing from the spirit and scope of the invention.

For example, mica or isinglass may be adhered to the specimen fixing surfaces of the specimen stage arrays respectively formed in accordance with the first and second embodiments, and then cleaved to subject the specimen stage arrays to surface treatment.

### Industrial Applicability

The present invention provides a specimen stage array that readily enables uniform surface treatment of the specimen fixing surfaces of specimen stages.

## Claims

1. A specimen stage array (10; 20; 30) for a scanning probe microscope, **characterized by** including specimen stages (12; 22; 32) to hold specimens as observation targets of the scanning probe microscope, respectively, the specimen stages (12; 22; 32) including specimen fixing surfaces (12a; 22a; 32a) to which the specimens are fixed, respectively, and all the specimen stages (12; 22; 32) being arrayed so that the specimen fixing surfaces (12a; 22a; 32) are included in a common plane.

2. A specimen stage array (10; 20) according to claim 1, **characterized in that** the specimen stage array (10; 20) includes a flat plate member of the same material.

3. A specimen stage array (20) according to claim 1, **characterized in that** the specimen stage array (20) includes a frame (24) surrounding the specimen stages (22), and bridge portions (26) connecting the frame (24) and the specimen stages (22).

4. A specimen stage array (30) according to claim 1, **characterized in that** the specimen stage array (30) includes a holding member (34) to hold the specimen stages (32), the holding member (34) comprises a film having an adhesive surface, and the holding member (34) holds the specimen stages (32) so that all the specimen stages (32) have the same height.
